# EUROPÄISCHE PATENTSCHRIFT

(11) **EP 3 640 628 B1**
(45) Veröffentlichungstag und Bekanntmachung des Hinweises auf die Patenterteilung: **06.03.2024**
(21) Anmeldenummer: 18200558.7
(22) Anmeldetag: 15.10.2018
(51) Int. Cl.: G01N 21/88, G01N 21/94

(54) **VERFAHREN ZUM PRÜFEN EINER OBERFLÄCHE EINES PRÜFOBJEKTS**
METHOD FOR TESTING THE SURFACE OF AN OBJECT
PROCÉDÉ DE TEST DE LA SURFACE D'UN OBJET

(43) Veröffentlichungstag der Anmeldung: 22.04.2020
(73) Patentinhaber: Fraunhofer-Gesellschaft zur Förderung der angewandten Forschung e.V., 80686 München (DE)
(72) Erfinder: Carl, Daniel, 79312 Emmendingen (DE); Brandenburg, Albrecht, 79104 Freiburg (DE); Basler, Carl, 79280 Au (DE)
(74) Vertreter: WSL Patentanwälte Partnerschaft mbB

(56) Entgegenhaltungen:
- EP-A1- 0 373 169
- EP-A1- 1 914 538
- DE-A1- 4 321 261
- DE-A1-102005 026 419
- PL-B1- 208 618
- US-A1- 2018 029 085
- ISMAEL SALVADOR ET AL: "Demonstrations of Computer Vision Applications", DATABASE AND EXPERT SYSTEMS APPLICATIONS (DEXA), 2010 WORKSHOP ON, IEEE, PISCATAWAY, NJ, USA, 30 August 2010 (2010-08-30), pages 260-263, XP031767232, ISBN: 978-1-4244-8049-4

## Beschreibung

Die vorliegende Erfindung betrifft ein Verfahren zum Prüfen einer Oberfläche eines Prüfobjekts.

Systeme zur Prüfung von Oberflächen von Prüfobjekten werden bei verschiedenen Gelegenheiten eingesetzt. Mit Hilfe der Oberfläche eines Prüfobjekts können verschiedene Informationen gewonnen werden. So ist beispielsweise durch eine derartige Prüfung die Güte eines Produkts und/oder des Produktionsprozesses bestimmbar. In anderen Fällen ist anhand der Oberfläche die Echtheit eines Produkts verifizierbar. Dies ist insbesondere von Bedeutung bei Produkten, die in großen Stückzahlen und/oder mit kurzen Taktzeiten gefertigt werden, da hier beispielsweise großer finanzieller Aufwand wegen Schadensersatz, Rückruf oder Vernichtung folgen kann.

Aus dem Stand der Technik sind beispielsweise Systeme bekannt, die Beschichtungen, Verunreinigungen oder Defekte berührungslos im Produktionstakt messen. Hierbei regt das System zunächst mithilfe von UV-Licht die Eigenfluoreszenz einer gewünschten oder unerwünschten Substanz auf einer Prüfobjektoberfläche an und macht anschließend die emittierte Fluoreszenzstrahlung sichtbar. Dadurch sind beispielsweise gewünschte Beschichtungen beziehungsweise unerwünschte Rückstände detektierbar.

Nachteilig an der vorgehenden Lösung ist unter anderem, dass die zu prüfenden Objekte für die Messung im Produktionstakt eines speziellen Handlings bedürfen. Das Handling kann beispielsweise darin bestehen, dass das Prüfobjekt zunächst auf einem Förderband liegend vermessen wird. Anschließend wird es von dem Förderband aufgenommen auf eine andere Seite gedreht und darauffolgend wieder vermessen. Dies ist zu wiederholen, bis alle gewünschten Seiten des Prüfobjekts vermessen worden sind.

Aus der US 2018/0029085 A1 ist ein Verfahren und eine Vorrichtung zum Sortieren von Objekten bekannt, welche eine Hochgeschwindigkeitsbilddatenerfassung bereitstellen, um verschiedene Datenströme in Echtzeit zusammenzuführen, während destruktive Interferenzen vermieden werden, wenn individuelle Sensoren oder Detektoren verwendet werden, um Daten über interne oder externe Merkmale und Eigenschaften und Qualitäten von Prüfobjekten bereitzustellen.

Ferner ist aus der PL 208 618 B1 eine Vorrichtung zur automatischen optischen Inspektion von Prüfobjekten bekannt. Diese Vorrichtung umfasst eine Analysekammer, Kameras, die mit einem Computer verbunden sind, ein Netzteil, ein Detailauswahlsystem, wobei die Kameras in der Analysekammer angeordnet sind, wobei eine Linse auf die Mitte der zylindrischen Analysekammer gerichtet ist, wobei das Detailbereitstellungssystem über dem oberen Teil der zylindrischen Analysekammer angeordnet ist, der Teil der Detailauswahleinrichtung und das Äußere der zylindrischen Kammer angeordnet ist.

Es ist Aufgabe der vorliegenden Erfindung, ein Verfahren zum Prüfen einer Oberfläche eines Prüfobjekts von einer Mehrzahl von Seiten bereitzustellen, welches ohne aufwändiges Handling zum Positionieren des Prüfobjekts auskommt.

Erfindungsgemäß wird die Aufgabe durch ein Verfahren gemäß dem Anspruch 1 gelöst.

Die vorliegende Erfindung basiert auf folgendem Grundgedanken: Ein Prüfobjekt fliegt ohne Handling-Aufwand fei auf einer Objektprüfstrecke und kann daher während des Fluges von allen Seiten analysiert werden. Ziel ist es, ein Prüfobjekt dahingehend zu prüfen, ob seine Oberfläche eine Fluoreszenz zeigt oder nicht. Darüber hinaus wird die Objektprüfung in einer Ausführungsform so ausgestaltet, dass sie aus der Intensität der Lumineszenzstrahlung einen Rückschluss auf die Dicke der Beschichtung, bzw. Verunreinigung zulässt. Außerdem wird angestrebt, die räumliche Verteilung der Beschichtung/Verunreinigung auf der Oberfläche zu erfassen. Dabei kann die zu beobachtende Fluoreszenz von dem Material der Oberfläche des Prüfobjekts selbst herrühren oder von einer Substanz auf der Oberfläche wie z.B. einer Beschichtung oder einer Verunreinigung des Prüfobjektes. Es sind Fälle denkbar, in denen eine Fluoreszenz ein Anzeichen für eine Verunreinigung der Oberfläche ist, aber auch Fälle, in denen eine Fluoreszenz ein Anzeichen für eine vorhandene, gewollte Beschichtung ist. Dabei ist das Prüfobjekt das ganze Objekt oder das Objekt mit einem darauf befindlichen unerwünschten Belag oder einer darauf gezielt aufgebrachten Beschichtung.

Es sind drei Herausforderungen zu lösen: Zum einen weist ein Prüfobjekt oder eine auf der Oberfläche des Prüfobjekts befindliche Beschichtung regelmäßig nur eine geringe Eigenfluoreszenz auf.

Zum anderen bewegt sich das Prüfobjekt auf seinem Flug entlang der Objektprüfstrecke schnell gegenüber der Objektbeleuchtungseinheit und der Objekterfassungseinheit. Gleichzeitig soll aber zumindest in einer Ausführungsform ein Bild des Prüfobjekts mit einer hinreichend hohen räumlichen Auflösung aufgenommen werden.

Das Prüfobjekt ist einerseits zu beleuchten und andererseits dessen emittierte Fluoreszenzstrahlung zu detektieren. Das Prüfobjekt wird mittels der Objektbeleuchtungseinheit mit einer sehr großen Lichtintensität beleuchtet. Dadurch wird die regelmäßig geringe Eigenfluoreszenz des Prüfobjekts angeregt. Das Prüfobjekt emittiert nun Fluoreszenzstrahlung. Aufgrund der Geschwindigkeit des Prüfobjekts während des Flugs kann diese Beleuchtung in einem sehr kurzen Zeitintervall erfolgen, beispielsweise mittels kurz gepulster LEDs. Aber auch dauerhafte Beleuchtung ist möglich. Dritte Herausforderung ist eine Messtechnik, die geeignet ist die emittierte Fluoreszenzstrahlung zu erfassen. Aufgrund der Geschwindigkeit des Prüfobjekts während des Flugs erfolgt diese Erfassung ebenso in einem sehr kurzen Zeitintervall. Hierzu werden beispielsweise Kameras mit kurzer Belichtungszeit eingesetzt.

Ein Prüfobjekt im Sinne der vorliegenden Erfindung ist ein zu überprüfender Gegenstand. Dabei kann die Oberfläche des Prüfobjekts vollständig oder auch nur abschnittsweis, beispielsweise stichpunktartig auf verschiedenen Seiten der Oberfläche des Prüfobjekts, geprüft werden.

Die Flugstrecke des Prüfobjekts beschreibt abschnittsweise eine Gerade oder Parabel.

Im Sinne der vorliegenden Erfindung kann sowohl die erste Wellenlänge als auch die zweite Wellenlänge Bestandteil jeweils eines Wellenlängenbereichs mit einer vorgegebenen Bandbreite sein. Beispielweise ist die erste Wellenlänge die Schwerpunktswellenlänge eines ersten Wellenlängenbereichs und die zweite Wellenlänge ist die Schwerpunktswellenlänge eines zweiten Wellenlängenbereichs.

Die erste Wellenlänge wird bestimmt durch die Ausgestaltung der Objektbeleuchtungseinheit, d.h. insbesondere durch die Wahl der Quelle für die Lumineszenzstrahlung und ggf. eines Filters. Es versteht sich, dass die erste Wellenlänge so zu wählen ist, dass sie innerhalb der Absorptionswellenlängen des zu untersuchenden Stoffes in oder auf der Oberfläche des Prüfobjekts liegt, die zu einer Fluoreszenz des zu untersuchenden Stoffes führen.

Ebenso versteht es sich, dass die Objekterfassungseinheit so auszugestalten ist, dass sie für die von dem Prüfobjekt abgestrahlte Lumineszenzstrahlung sensitiv ist.

Eine Ausführungsform der Erfindung ist dadurch gekennzeichnet, dass die Objektprüfstrecke eine Fallstrecke ist, wobei das System derart eingerichtet und angeordnet ist, dass das Prüfobjekt in dem Betrieb des Systems die Objektprüfstrecke entlang fällt.

In einer solchen Ausführungsform ist die Handhabung des Prüfobjekts besonders einfach. In einer Ausführungsform muss das erfindungsgemäße System lediglich so ausgestaltet sein, dass das Prüfobjekt durch das System hindurchfallen kann, d.h. insbesondere an der Objektbeleuchtungseinheit und der Objekterfassungseinheit vorbei fallen kann.

Eine Ausführungsform der Erfindung ist dadurch gekennzeichnet, dass die Objekterfassungseinrichtung derart eingerichtet und angeordnet ist, dass die Objektdaten ein Bild mit einer Mehrzahl von Bildpunkten beschreiben.

Während das System zum Durchführen des beanspruchten Verfahrens grundsätzlich es ermöglicht das Prüfobjekt aus mehreren Raumrichtungen an einzelnen Punkten zu prüfen, so ist es zweckmäßig, wenn die Objektdaten ein Bild des Prüfobjekts mit einer Mehrzahl von Bildpunkten beschreiben. Auf diese Weise lassen sich beispielsweise Fehlstellen in einer Beschichtung auf der Oberfläche des Prüfobjekts oder auch Verunreinigungen auf der Oberfläche des Prüfobjekts lokalisieren.

In einer Ausführungsform der Erfindung umfasst die Mehrzahl von Raumrichtungen aus denen das Prüfobjekt beleuchtet wird, zwei zueinander parallele, einander entgegengesetzte Raumrichtungen mit zueinander parallelen, aber entgegengesetzt orientierten Oberflächennormalen.

Die Objektbeleuchtungseinheit ist in einer Ausführungsform ferner derart ausgebildet, dass das Prüfobjekt möglichst vollständig beleuchtet ist, aber wenig darüber hinaus.

Es versteht sich, dass die Objektbeleuchtungseinheit derart eingerichtet und angeordnet ist, dass sie zumindest in einer Ausführungsform das Prüfobjekt aus der Mehrzahl von Raumrichtungen gleichzeitig beleuchtet.

Entscheidend für das Erfassen von Lumineszenzstrahlung, die von der Oberfläche des Prüfobjekts in eine Mehrzahl von Raumrichtungen abgestrahlt wird, ist dass der gesamte zu prüfenden Abschnitt der Oberfläche mit der anregenden elektromagnetischen Strahlung mit der ersten Wellenlänge beleuchtet wird. Dazu ist es erforderlich, das Prüfobjekt aus einer Mehrzahl von Raumrichtungen zu beleuchten, sodass Oberflächenabschnitte des Prüfobjekts mit einer Mehrzahl von Orientierungen, d. h. mit einer Mehrzahl von Flächennormalen in verschiedenen Raumrichtungen, beleuchtet werden.

Zu diesem Zweck kann in einer Ausführungsform die Objektbeleuchtungseinheit ein einziges Beleuchtungselement, beispielsweise einen Laser mit einer Anordnung von Spiegeln und Ablenkeinheiten, aufweisen, welches in der Lage ist, das Objekt gleichzeitig aus der Mehrzahl von Raumrichtungen zu beleuchten.

In einer alternativen Ausführungsform der Erfindung weist die Objektbeleuchtungseinheit eine Mehrzahl von Beleuchtungselementen auf, wobei die Beleuchtungselemente derart eingerichtet und angeordnet sind, dass sie das Prüfobjekt aus der Mehrzahl von Raumrichtungen beleuchten.

Auch in diesem Fall beleuchtet die Mehrzahl von Beleuchtungselementen die Oberfläche des Prüfobjekts gleichzeitig.

Dabei deckt die Mehrzahl von Beleuchtungselementen der Objektbeleuchtungseinheit in einer Ausführungsform zusammen ein Beleuchtungsfeld über einen Raumwinkel von 4 π, d.h. über eine vollständige Kugel, ab. Auf diese Weise kann ein Prüfobjekt mit einer beliebig geformten Oberfläche während des Fluges von allen Seiten angeregt werden.

Ein Beleuchtungselement im Sinne der vorliegenden Anmeldung umfasst regelmäßig einen Laser, eine LED oder eine HG-Dampflampe. Dabei kann das Beleuchtungselement in einer Ausführungsform zusätzlich einen Spiegel und/oder eine Ablenkeinheit aufweisen.

Das Beleuchtungselement ist dauerhaft oder gepulst betreibbar. Im gepulsten Betrieb ist das Verhältnis von AN zu AUS bevorzugt kleiner 1 zu 1000.

In einer Ausführungsform der Erfindung gilt es, die zu prüfende Oberfläche des Prüfobjekts möglichst homogen mit der Anregungsstrahlung auszuleuchten. Mit anderen Worten ausgedrückt soll die Intensität der Anregungsstrahlung über die zu prüfende Oberfläche des Prüfobjekts hinweg möglichst konstant sein.

Dazu ist in einer Ausführungsform ein Abstand zwischen dem jeweiligen Beleuchtungselement und der zu beleuchtenden Oberfläche des Prüfobjekts so groß wie möglich und der Divergenzwinkel der auf die Oberfläche treffenden Anregungsstrahlung ist möglichst klein. Dies verhindert einen Intensitätsunterschied zwischen zwei Punkten auf dem Prüfobjekt, die einen unterschiedlichen Abstand von dem Beleuchtungselement haben. Der Divergenzwinkel des jeweiligen Beleuchtungselements ist bevorzugt so klein, dass ausschließlich das Sichtfeld eines Detektors der Beleuchtungseinheit beleuchtet wird. Dies vermeidet eine Überausleuchtung des Prüfvolumens. Eine derartige Überbeleuchtung führt zu einer Verminderung der detektierbaren Lumineszenzstrahlung.

Der Prozess der Lumineszenz ist in den meisten Substanzen entweder in der Oberfläche des Prüfobjekts oder auf der Oberfläche des Prüfobjekts energetisch sehr ineffizient. Nur ein geringer Teil der Leistung der Anregungsstrahlung wird in Leistung der Lumineszenzstrahlung umgewandelt. Die Intensität der Lumineszenzstrahlung ist daher grundsätzlich betrachtet sehr gering. Bei der erfindungsgemäßen Realisierung eines Systems zum Prüfen der Oberfläche des Prüfobjekts, fliegt das Prüfobjekt die Prüfstrecke entlang, so dass für die Objekterfassungseinheit nur eine kurze Integrations- oder Messzeit zur Verfügung steht. Dies gilt insbesondere dann, wenn ein Bild mit einer hinreichenden Ortsauflösung erfasst werden soll.

Daher gilt es in einer Ausführungsform der Erfindung, die Oberfläche des Prüfobjekts mit einer möglichst hohen Lichtleistung pro Flächeneinheit der Anregungsstrahlung zu beleuchten.

Dazu ist in einer Ausführungsform der Erfindung die Objektbeleuchtungseinheit derart ausgebildet und angeordnet, dass sie das Prüfobjekt mit einer größtmöglichen nutzbaren Lichtleistung pro Flächeneinheit des Prüfobjekts beleuchtet.

In einer Ausführungsform ist die Wellenlänge der Anregungsstrahlung kleiner als 460 nm. Erfindungsgemäß ist die Lichtleistung pro Flächeneinheit auf der Oberfläche des Prüfobjekts gleich 0,01 W/cm² oder größer. Zudem ist in einer Ausführungsform die Anregungsstrahlung spektral schmalbandig. Schmalbandig bedeutet im Sinne der vorliegenden Anmeldung, dass die Lichtleistung pro Flächeneinheit bei einer gegenüber dem Maximum an Lichtleistung pro Flächeneinheit um 60 nm rotverschobenen Wellenlänge um mindestens 4 Größenordnungen schwächer sein muss, als im Maximum der Lichtleistung pro Flächeneinheit.

Die geforderte hohe Lichtleistung pro Flächeneinheit der Oberfläche des Prüfobjekts lässt sich grundsätzlich entweder mit einem flächig beleuchtenden Beleuchtungselement, welches eine Vielzahl von Punkten auf der Oberfläche des Prüfobjekts gleichzeitig beleuchtet, oder einem Abtastenden Beleuchtungselement, welches bestimmte Oberflächenabschnitten des Prüfobjekts zeitlich nacheinander beleuchtet, realisieren.

Im Falle eines die Oberfläche des Prüfobjekts flächig beleuchtenden Beleuchtungselements ist dieses erfindungsgemäß ein LED-Flächenstrahler oder ein LED-Array.

In einer Ausführungsform der Erfindung wird die erforderliche hohe Anregungsleistung realisiert durch eine vergrößernde oder kollimierende Optik in Abstrahlrichtung zwischen dem LED-Flächenstrahler oder dem LED-Array. In einer Ausführungsform ist die Optik so eingerichtet, dass sie eine 10-fach vergrößernde Abbildung des LED-Flächenstrahlers oder des LED-Arrays auf die Oberfläche des Prüfobjekts bewirkt.

In einer Ausführungsform wird dabei eine homogene Ausleuchtung der Oberfläche durch eine unscharfe, vorzugsweise durch eine leicht unscharfe Abbildung der Lichtquellen auf das Prüfobjekt realisiert.

In einer Ausführungsform ist die Optik derart ausgestaltet, dass sie keine effektive Apertur für den LED-Flächenstrahler oder das LED-Array darstellt.

In einer weiteren Ausführungsform der Erfindung ist in Abstrahlrichtung nach der Optik ein Anregungsfilter vorgesehen, welches eine von der Optik abgestrahlte Fluoreszenzstrahlung blockt und die Anregungsstrahlung transmittiert.

In einer speziellen Ausführungsform umfasst das Beleuchtungselement ein LED-Array aus 3x3 SMD-LEDs, mit verklebten Linsen für die vergrößernde Abbildung auf die Oberfläche und einem Abstrahlwinkel von 20 Grad oder weniger.

In einer Ausführungsform der Erfindung werden die LEDs des LED-Flächenstrahlers oder des LED-Arrays zeitlich intermittierend, d.h. gepulst, betrieben. Auf diese Weise kann der maximale Stromdurch die LEDs und damit die abgestrahlte maximale Leistung erhöht werden, wobei anders als bei einem Dauerstrom mit einem konstanten Strom, der gleich dem maximalen Strom im gepulsten Betrieb ist, die thermische Belastung der LEDs erheblich reduziert ist.

Es versteht sich, dass in einer Ausführungsform, bei der die Objektbeleuchtungseinheit nur eine einzige, die Oberfläche der Objekterfassungseinheit abtastende Beleuchtungseinheit aufweist, diese derart eingerichtet ist, dass sie mindestens zwei vollständige Zeilen oder zwei Orte in jeweils einer Zeile aus zwei unterschiedlichen Raumrichtungen auf der Oberfläche des Prüfobjekts gleichzeitig beleuchtet.

Alternativ oder zusätzlich zu der zuvor beschriebenen Erhöhung der Lichtleistung der Anregungsstrahlung auf der Oberfläche des Prüfobjekts gilt es in einer Ausführungsform der Erfindung die Objekterfassungseinheit derart auszugestalten und anzuordnen, dass sie eine möglichst hohe Sensitivität für die von der Oberfläche abgestrahlte Lumineszenzstrahlung aufweist.

Grundsätzlich ist es möglich, dass die Objekterfassungseinheit nur zwei Detektoren aufweist, welcher die Lumineszenzstrahlung von der Oberfläche des Prüfobjekts aus zwei Raumrichtungen erfasst.

In einer Ausführungsform jedoch umfasst die Objekterfassungseinheit mindestens drei Detektoren mit jeweils einem Beobachtungsfeld wobei die Beobachtungsfelder der Detektoren zusammen eine Kugel abdecken. Auf diese Weise lässt eine Kugel oder ein Tetraeder von allen Seiten gleichzeitig erfassen. In einer bevorzugten Ausführungsform weist die Objekterfassungseinheit sechs Detektoren auf.

Dabei kann der Detektor ein flächiges Detektorarray mit einer matrixartigen Anordnung von Detektoren, beispielsweise in Form einer CMOS-Kamera sein.

Alternativ kann der Detektor ein punktförmiger Detektor sein. Die Lumineszenzstrahlung von der Oberfläche des Prüfobjekts wird dann an einer Mehrzahl von Orten in einer Mehrzahl von Zeilen zeitlich nacheinander erfasst.

Jeder einzelne Detektor, d.h. ggf. Bildpunkt einer Zeilenkamera oder flächigen Kamera muss eine möglichst hohe Sensitivität für die Lumineszenzstrahlung aufweisen. Geeignet als Detektoren sind daher CMOS Detektoren, Photomultiplier, Avalanchephotodioden und Photodioden.

In einer Ausführungsform weist jeder Detektor ein Objektiv auf, das so eingerichtet ist, dass es nur den Bildbereich des Prüfobjekts abbildet (nicht mehr), um eine ausreichende Auflösung des Prüfobjektes zu ermöglichen. Die Blende des Objektives ist an die Auflösung und die Größe des Prüfobjektes angepasst. Sie ist so weit geschlossen, dass in dem Abstandsbereich, den das Objekt einnimmt, das Objekt nur so scharf abgebildet wird, wie es die Bewegungsunschärfe zulässt (maximale Lichtmenge).

In einer Ausführungsform weist die Objekterfassungseinrichtung eine spektrale Filterung in Form eines Bandpasses für die Lumineszenzstrahlung auf, um zu verhindern, dass Anregungsstrahlung auf die Detektoren der Objekterfassungseinrichtung gelangt.

In einer Ausführungsform ist dieses Filter realisiert durch ein Interferenzfilter mit einer optischen Dichte von OD6 für den Wellenlängenbereich, in dem das Licht absorbiert werden soll. Im Durchlassbereich die Transmission des Filters hoch, typischerweise >70%.

Grundsätzlich ist es möglich, die Objekterfassungseinheit kontinuierlich zu betreiben, sodass sie das Prüfobjekt nach Art eines Films während des Fluges aufnimmt.

Insbesondere in einer Ausführungsform, bei welcher der Bildbereich der Detektoren minimiert ist, ist es jedoch sinnvoll, ein Bild exakt im richtigen Moment zu erfassen. Dazu werden zwei Lichtschranken eingesetzt, aus deren Triggersignal der Zeitpunkt errechnet wird, an dem sich das Prüfobjekt im Bildfeld der Detektoren befindet.

Trotz Filterung der Anregungsstrahlung kann eine direkte Bestrahlung der Detektoren mit Anregungsstrahlung zu einer Überbelichtung führen. Daher wird in einer Ausführungsform das einem Detektor gegenüberliegende Beleuchtungselement zeitversetzt ausgelöst. Beispielsweise werden 3 Kameras und Beleuchtungselemente aus einem oberen Abschnitt der Objektprüfstrecke zeitlich nach drei Kameras und Beleuchtungselementen aus einem unteren Abschnitt der Objektprüfstrecke ausgelöst.

In einer Ausführungsform der Erfindung sind alle Elemente und Bauteile des Systems nicht fluoreszierend.

In einer Ausführungsform sind die Objektbeleuchtungseinheit und die Objekterfassungseinheit derart eingerichtet und angeordnet, dass sie so zusammenwirken, dass eine geringstmögliche Integrationszeit pro erfasstem Bildpunkt des Prüfobjekts resultiert. Die Minimierung der Integrationszeit führt zu einer Maximierung der Ortsauflösung des Bildes des Prüfobjektes.

Die Integrationszeit beträgt erfindungsgemäß weniger als 5 Zehntelsekunden, bevorzugt weniger als 100 Millisekunden und besonders bevorzugt weniger als 500 Mikrosekunden.

Grundsätzlich ist es möglich, jede der zuvor beschriebenen Ausführungsformen der Objektbeleuchtungseinheit mit einer der ebenfalls beschriebenen Ausführungsformen der Objekterfassungseinheit zu kombinieren. Allerdings ist es vorteilhaft, wenn die Geometrie der Beleuchtungselemente der Objektbeleuchtungseinheit und der Detektoren der Objekterfassungseinheit aufeinander abgestimmt sind, um eine hohe Messgeschwindigkeit zu erzielen. Mit anderen Worten wird entweder eine gleichzeitige flächige Beleuchtung der Anregungsstrahlung mit einer flächigen Kamera für die Lumineszenzstrahlung kombiniert oder eine zeilenförmig abtastende Beleuchtung der Anregungsstrahlung mit einer zeilenförmig abtastenden Zeilenkamera für die Lumineszenzstrahlung oder eine punkförmig abtastende Beleuchtung der Anregungsstrahlung mit einem punktförmig abtastenden Detektor für die Lumineszenzstrahlung.

Daher ist in einer Ausführungsform die Objektbeleuchtungseinheit derart eingerichtet und angeordnet, dass sie das Prüfobjekt aus der Mehrzahl von Raumrichtungen gleichzeitig beleuchtet, und die Objekterfassungseinheit ist derart eingerichtet und angeordnet, dass sie mit einer Mehrzahl von Detektoren das Prüfobjekt aus der Mehrzahl von Raumrichtungen gleichzeitig erfasst, wobei die Detektoren als bildgebende Kameras ausgebildet sind.

In einer alternativen Ausführungsform ist die Objektbeleuchtungseinheit derart eingerichtet und angeordnet, dass sie die Oberfläche des Prüfobjekts zeilenweise beleuchtet, und die Objekterfassungseinheit ist derart eingerichtet und angeordnet, dass sie die Lumineszenzstrahlung der beleuchteten Oberfläche abgestrahlte Lumineszenzstrahlung zeilenweise mittels eines zeilenförmigen Detektors erfasst, wobei der Detektor in Richtung der Zeile ortsaufgelöst ist.

Dabei spannen die optische Achse der Zeilenkamera, die Beleuchtungseinheit und die von der Beleuchtungseinheit erzeugte Beleuchtungslinie in einer Ausführungsform eine gemeinsame Ebene auf. So wird sichergestellt, dass das Prüfobjekt auch bei variierendem Abstand zum Detektor und/oder zur Beleuchtungseinheit im Bild der Zeilenkamera beleuchtet ist.

Die zeilenförmig abtastende Beleuchtung lässt sich beispielsweise mit LEDs oder einem Laser realisieren.

In einer Ausführungsform wird ein Laser mit einer Powelllinse zu einer Linie aufgefächert. Diese Linie wird weiterhin mit einer Zylinderlinse entlang der schmalen Achse komprimiert, sodass eine Linie mit einer Höhe von wenigen 100µm entsteht. Dadurch entsteht eine hohe Leistungsdichte im Bereich der beleuchteten Linie. Diese Linie wird über ein Objektiv an der Zeilenkamera auf die Pixel der Zeilenkamera abgebildet. Die gestreute oder reflektierte Anregungsstrahlung wird vor der Zeilenkamera durch ein optisches Filter herausgefiltert, welches die entstehende Fluoreszenzstrahlung transmittiert. Es gilt sicherzustellen, dass die Anregungsstrahlung der Beleuchtungseinheit spektral schmalbandig ist, dass kein Licht der Beleuchtung den Filter der Zeilenkamera durchläuft. Das Bild entsteht durch Zusammensetzten der zeitlich aufeinander folgenden Zeilenaufnahmen, welche typisch mit hoher Geschwindigkeit, vorzugsweise mit einer Taktrate von 1 kHz bis 10 kHz, aufgenommen werden.

In einer weiteren Ausführungsform werden mehrere Zeilenkameras aus unterschiedlichen Raumrichtungen eingesetzt um die Oberfläche des Objektes nach Möglichkeit vollständig zu erfassen.

Das entstehende Bild ist typischerweise verzerrt durch eine nichtlineare Bewegung des Prüfobjektes, die auch Drehbewegungen enthalten kann. Um daraus ein entzerrtes Bild zu erhalten und dieses je Zeilenkamera einer Oberfläche der Prüfobjektes zuzuordnen, werden in einer weiteren Ausführungsform weitere Kameras eingesetzt, welche die Bewegung des Bauteils verfolgen und aus deren Bildern die Lage des Bauteils erkannt wird.

In noch einer weiteren Ausführungsform ist die Objektbeleuchtungseinheit derart eingerichtet und angeordnet, dass sie zeitlich nacheinander eine Mehrzahl von Punkten der Oberfläche des Prüfobjekts beleuchtet, und die Objekterfassungseinheit weist einen punktförmigen Detektor auf, wobei Detektor derart eingerichtet und angeordnet ist, dass er zeitlich nacheinander die von den beleuchteten Punkten der Oberfläche des Prüfobjekts abgestrahlte Lumineszenzstrahlung erfasst.

Eine Realisierung einer solchen Ausführungsform umfasst einen Laser als Beleuchtungseinrichtung und einen Punktdetektor mit einer Abbildungseinheit als Detektor, wobei der Laser und der Punktdetektor auf einer gemeinsamen optischen Achse überlagert sind. Diese optische Achse wird über eine schnelle Ablenkeinheit in einer Ebene gescannt. Damit kann das Prüfobjekt während des Falls abgescannt werden. Das Zusammensetzten des Bildes erfolgt analog zu der Bildentstehung wie zuvor für die Zeilenkamera beschrieben.

In einer Ausführungsform weist das System ein Fördermittel auf, das derart eingerichtet und angeordnet ist, dass mit dem Fördermittel das Prüfobjekt einem Beginn der Objektprüfstrecke zuführbar ist, wobei das Fördermittel ein Abwurfende aufweist, so dass in einem Betrieb des Systems das Prüfobjekt entlang der Objektprüfstrecke fliegt

In einer solchen Ausführungsform stellt das System selbst die Zuführung des Prüfobjekts, zweckmäßigerweise aber einer Mehrzahl von Prüfobjekten nacheinander, zu der Objektprüfstrecke bereit. Dabei kann das Abwurfende des Fördermittels entweder einen aktiven Wurf des Prüfobjekts entlang der Objektprüfstrecke bewirken oder aber einen freien Fall des Prüfobjekts.

Daher ist eine Ausführungsform der Erfindung dadurch gekennzeichnet, dass das System ein Fördermittel aufweist, wobei das Fördermittel derart eingerichtet und angeordnet ist, dass das Fördermittel in dem Betrieb des Systems das Prüfobjekt zu einem Beginn der Objektprüfstrecke fördert, und wobei das Fördermittel ein in einer vertikalen Richtung über der Objektprüfstrecke angeordnetes Abwurfende aufweist, so dass in dem Betrieb des Systems das Prüfobjekt entlang der Objektprüfstrecke fällt.

Es versteht sich, dass das System in einer Ausführungsform eine Auswerteeinheit aufweist, die derart wirksam mit der Objekterfassungseinheit verbunden ist, dass sie in dem Betrieb des Systems die Objektdaten von der Objekterfassungseinheit erhält, und die derart eingerichtet ist, dass sie in dem Betrieb des Systems die Objektdaten auswertet. In einer Ausführungsform umfasst die Auswerteeinheit einen Rechner.

In einer Ausführungsform ist ferner die Auswerteeinheit mit einer Darstellungseinheit verbunden, wobei die Darstellungseinheit die Objektdaten oder aus den Objektdaten abgeleitete Darstellungsdaten grafisch wiedergibt.

In einer weiteren Ausführungsform der Erfindung weist das System zusätzlich eine Objektlageerkennungseinheit auf, die derart eingerichtet und angeordnet ist, dass die räumliche Lage und/oder die Orientierung des Prüfobjekts auf der Objektprüfstrecke relativ zu der Objekterfassungseinheit erfassbar sind.

Vorzugsweise arbeitet die Objekterfassungseinheit mit einem optischen Messverfahren zur genauen Erfassung von Lage und/oder Orientierung des Prüfobjekts. In einer Ausführungsform verwendet die Objekterfassungseinheit eine andere Wellenlänge zur Beleuchtung des Prüfobjekts als die Objektbeleuchtungseinheit.

Die Objektlageerkennungseinheit ist bevorzugt gebildet aus mindestens zwei die räumliche Lage des Prüfobjekts vollständig erfassenden, bildgebenden Kameras. In einer Ausführungsform der Erfindung erfasst die Objektlageerkennungseinheit nicht die Lumineszenzstrahlung von der Oberfläche des Prüfobjekts. In einer Ausführungsform weist die Objektlageerkennungseinheit ein Filter auf, welches die Lumineszenzstrahlung vor den Detektoren, insbesondere vor den Kameras der Objektlageerkennungseinheit herausfiltert.

Die oben genannte Aufgabe wird durch ein Verfahren zum Prüfen einer Oberfläche eines Prüfobjekts gelöst, welches die folgenden Schritte aufweist:
Beleuchten des Prüfobjekts mit elektromagnetischer Anregungsstrahlung mit einer ersten Wellenlänge,
Erfassen einer elektromagnetischen Lumineszenzstrahlung die von dem Prüfobjekt abgestrahlt wird, wobei die Lumineszenzstrahlung eine von der ersten Wellenlänge verschiedenen zweiten Wellenlänge aufweist,
Generieren von Objektdaten aus der erfassten Lumineszenzstrahlung und Ausgeben der Objektdaten,
wobei das Beleuchten des Prüfobjekts aus einer Mehrzahl von Raumrichtungen erfolgt,
wobei das Erfassen der Lumineszenzstrahlung von dem Prüfobjekt in einer Mehrzahl von Raumrichtungen erfolgt, und
wobei das Prüfobjekt während des Beleuchtens des Prüfobjekts und des Erfassens der Lumineszenzstrahlung fliegt,
wobei das Beleuchten des Prüfobjekts mit einer Objektbeleuchtungseinheit mit einer Mehrzahl von Beleuchtungselementen in Form eines LED-Flächenstrahlers oder eines LED-Arrays erfolgt,
wobei die Objektbeleuchtungseinheit derart ausgebildet und eingerichtet ist, dass sie das Prüfobjekt mit einer Lichtleistung pro Flächeneinheit auf der Oberfläche des Prüfobjekts von 0,01 W/cm² oder mehr beleuchtet,
wobei das Erfassen der Lumineszenzstrahlung mit einer Objekterfassungseinheit erfolgt,
wobei die Objektbeleuchtungseinheit und die Objekterfassungseinheit derart zusammenwirken, dass eine Integrationszeit pro erfasstem Bildpunkt des Prüfobjekts von weniger als 5 Zehntelsekunden resultiert,
wobei die Objekterfassungseinheit mindestens drei Detektoren mit jeweils einem Beobachtungsfeld aufweist, wobei die Beobachtungsfelder der Detektoren zusammen eine Kugel abdecken, und wobei
die Objekterfassungseinheit derart eingerichtet und angeordnet ist, dass sie mit mindestens drei Detektoren das Prüfobjekt aus der Mehrzahl von Raumrichtungen erfasst, wobei die Detektoren als bildgebende Kameras ausgebildet sind.

Soweit zuvor Aspekte der Erfindung im Hinblick auf das System beschrieben wurden, so gelten diese auch für das entsprechende Verfahren zum Prüfen der Oberfläche des Prüfobjekts und umgekehrt. Soweit das Verfahren mit einem System gemäß dieser Erfindung ausgeführt wird, so weist diese die entsprechenden Einrichtungen hierfür auf. Insbesondere sind Ausführungsformen des Systems Vorrichtung zum Ausführen der in dieser Anmeldung beschriebenen Ausführungsformen des Verfahrens geeignet.

In einer Ausführungsform des erfindungsgemäßen Verfahrens fällt das Prüfobjekt während des Beleuchtens des Prüfobjekts und des Erfassens der Lumineszenzstrahlung in einem freien Fall. Mit anderen Worten ausgedrückt fliegt oder fällt das Prüfobjekt während der Messung an der Objektbeleuchtungseinheit und Objekterfassungseinheit vorbei.

In einer Ausführungsform erfolgt die Beleuchtung des Prüfobjekts entweder aus mindestens drei Raumrichtungen, die eine Ebene aufspannen oder aus mindestens vier Raumrichtungen, die nicht alle in einer Ebene liegen.

Auf diese Weise wird ein beliebig geformtes Prüfobjekt von allen Seiten beleuchtet und die Lumineszenzstrahlung von allen Oberflächenabschnitten des Prüfobjekts erfasst.

Um ein vollständiges Bild des Prüfobjekts zu erhalten wird in einer Ausführungsform bei dem Erfassen der Lumineszenzstrahlung die Strahlung aus mindestens drei Raumrichtungen erfasst wird, wobei diese Raumrichtungen entweder annähernd gleichmäßig die Raumrichtungen in einer Ebene oder im dreidimensionalen Raum abdecken.

Prüfobjekte in Form eine Kugel oder eines Tetraeders lassen sich vollständig erfassen, wenn das Prüfobjekt aus zumindest drei Raumrichtungen beobachtet wird, wobei die Blickfelder der Detektoren bzw. Kameras zusammen eine vollständige Kugelschale abdecken.

Weitere Vorteile, Merkmale und Anwendungsmöglichkeiten der vorliegenden Erfindung werden anhand der folgenden Beschreibung von Ausführungsformen davon und der dazugehörigen Figu-ren deutlich.
- Figur 1: ist eine schematische Schnittansicht einer Kombination aus einem Beleuchtungselement einer Objektbeleuchtungseinheit und einem Detektor einer Objekterfassungseinheit, die zum Verständnis der beanspruchten Erfindung dient.
- Figur 2: ist eine schematische isometrische Ansicht eines Systems zum Prüfen eines Prüfobjekts, die zum Verständnis der beanspruchten Erfindung dient.
- Figur 3: ist eine schematische isometrische Ansicht eines Systems zum Prüfen eines Prüfobjekts, die zum Verständnis der beanspruchten Erfindung dient.
- Figur 4: ist eine isometrische Ansicht einer weiteren Ausführungsform eines Systems zum Prüfen eines Prüfobjekts, die zum Verständnis der beanspruchten Erfindung dient.

In den Figuren sind identische Elemente mit identischen Bezugszeichen bezeichnet.

In den hier beschriebenen beispielhaften Realisierungen der Erfindung gilt es, Öl auf einer Oberfläche 2 eines Halbzeugs 1 aus Metall ortaufgelöst zu erfassen, um verschmutzte Teile aussortieren oder gezielt nachreinigen zu können. Das Halbzeug 1 bildet im Sinne der vorliegenden Erfindung ein Prüfobjekt.

Das Öl auf der Oberfläche 2 des Halbzeugs 1 weist bei Anregung mit UV-Licht eine Eigenfluoreszenz auf, die es erfindungsgemäß zu erfassen gilt. Zu diesem Zweck bilden die Objektbeleuchtungseinheit und die Objekterfassungseinheit zusammen einen Fluoreszenz-Laserscanner, der in der Lage ist, eine Zeile auf der Oberfläche 2 des Halbzeugs 1 sehr schnell zu erfassen. Dabei werden alle Bildpunkte der Zeile im Wesentlichen gleichzeitig erfasst.

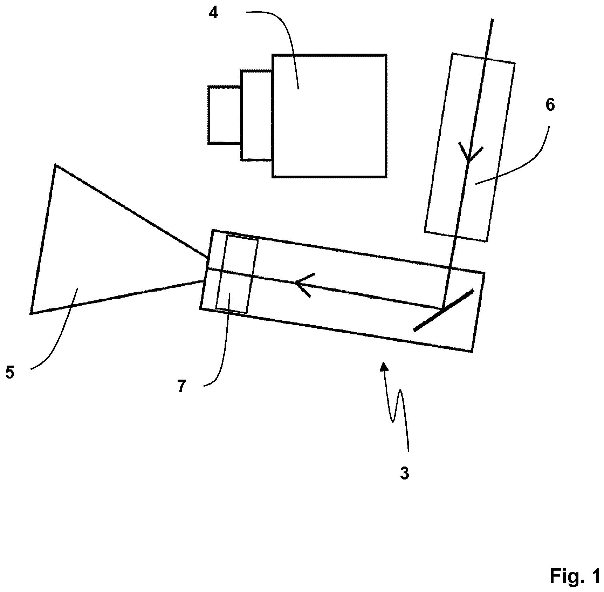

In Figur 1 ist nun eine schematische Schnittansicht durch ein Beleuchtungselement 3 und eine Zeilenkamera 4 gezeigt. Das Beleuchtungselement 3 dient der zeilenweisen Beleuchtung des Halbzeugs 1 mit elektromagnetischer Anregungsstrahlung 5. Demgegenüber erfasst die Zeilenkamera 4 zeilenweise die von dem Prüfobjekt bzw. von dessen Oberfläche abgestrahlte Lumineszenzstrahlung nach der Anregung mit der Anregungsstrahlung 5. Damit bildet das Beleuchtungselement 3 ein Element einer Objektbeleuchtungseinheit und die Kamera 4 bildet ein Element einer Objekterfassungseinheit im Sinne der vorliegenden Anmeldung.

Das Beleuchtungselement 3 umfasst einen Laser 6 und einen Strahlformer 7. Der Laser 6 erzeugt elektromagnetische Anregungsstrahlung mit einer Schwerpunktwellenlänge von 405 nm und einer Ausgangsleistung von 1 W. Der Strahlformer 7 weitet die Laserstrahlung in einer Richtung auf, sodass ein zeilenförmiger Fächer entsteht, der das Halbzeug 1 beleuchtet. Zeilenkamera 4 wiederum ist so orientiert, dass die Detektorzeile im Wesentlichen parallel zu dem Lichtfächer der Anregungsstrahlung 5 ist. Auf diese Weise kann ortsaufgelöst über die Zeile hinweg die Lumineszenzstrahlung von der mit der Anregungsstrahlung 5 beleuchteten Zeile auf der Oberfläche 2 des Halbzeugs 1 erfasst werden.

Ein vollständiges Bild ergibt sich durch die Flugbewegung des Halbzeugs 1 auf einer Objektprüfstrecke. Dabei verläuft die Objektprüfstrecke in einer Richtung senkrecht zu der Ebene der Zeichnung aus Figur 1. Das Halbzeug 1 fliegt an dem Beleuchtungselement 3 und dem Detektor 4 vorbei und sorgt dadurch für einen zeilenweisen Vorschub sowohl der anregenden Zeile der Anregungsstrahlung 5 auf der Oberfläche 2 als auch der Erfassung der Lumineszenzstrahlung von der Oberfläche 2 des Halbzeugs 1 mit Hilfe der Kamera 4.

In allen dargestellten Ausführungsformen bewegt sich das Halbzeug 1 auf der Objektprüfstrecke im freien Fall aufgrund der Schwerkraft der Erde.

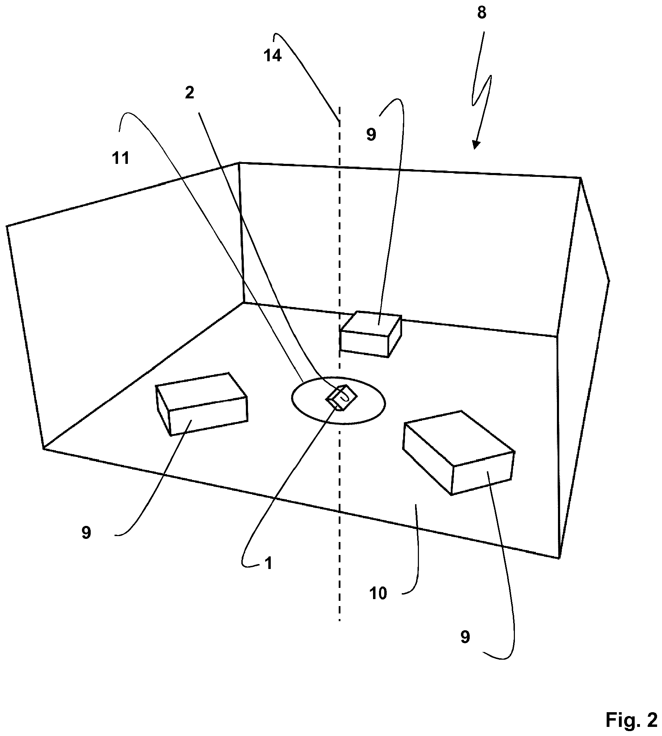

Figur 2 zeigt nun eine Ausführungsform des Systems 8, bei welchem das Halbzeug 1 aus einer Mehrzahl von Raumrichtungen, in dem konkreten Beispiel aus drei in einer Ebene liegenden Raumrichtungen gleichzeitig beleuchtet und erfasst wird. Zu diesem Zweck weist das System 8 aus Figur 2 drei Kombinationen aus jeweils einem Beleuchtungselement 3 und einer Kamera 4 auf. Diese Kombinationen haben in der Darstellung aus Figur 2 das Bezugszeichen 9.

Im Betrieb des Systems 8 fällt das Halbzeug 1 von oben auf der Objektprüfstreck 14 durch das System 8 hindurch. Zu diesem Zweck ist in der Bodenplatte 10 eine Aussparung 11 vorgesehen, sodass das Halbzeug 1 hindurch fallen kann. Im Vorbeiflug scannen die drei Kombinationen 9 die Oberfläche 2 des Halbzeug 1 vollständig aus drei Raumrichtungen ab, sodass eine Verunreinigung mit Umformöl auf der Oberfläche 2 zumindest auf allen Seitenflächen des Halbzeug 1 erfasst werden kann.

Die drei Beleuchtungselemente 3 in den drei Kombinationen 9 bilden zusammen die Objektbeleuchtungseinheit im Sinne der vorliegenden Anmeldung. Die drei Kameras 4 aus den drei Kombinationen 9 wiederum bilden zusammen die Objekterfassungseinheit im Sinne der vorliegenden Anmeldung.

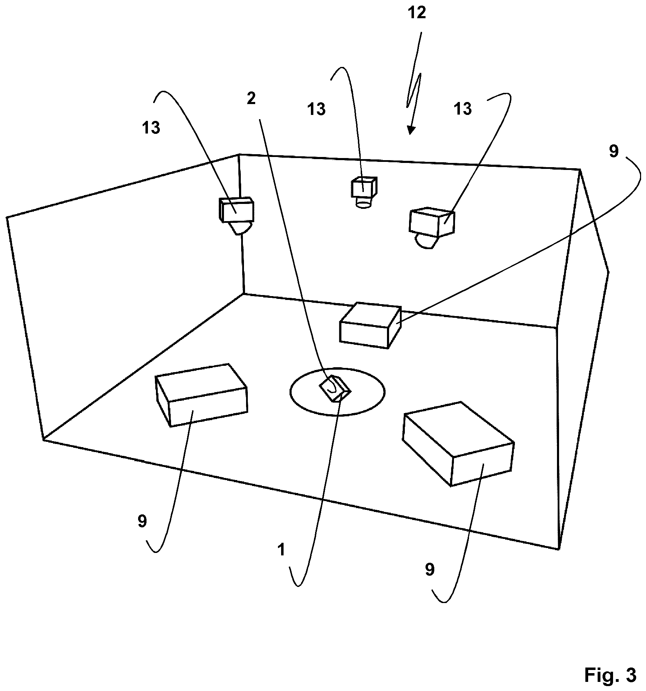

Figur 3 zeigt eine Variante des Systems 8`, wobei die Objektbeleuchtungseinheit und die Objekterfassungseinheit genauso ausgestaltet sind wie bei der Variante aus Figur 2. Daher sind die drei Kombinationen aus Beleuchtungselement 3 und Kamera 4 auch in Figur 3 mit dem Bezugszeichen 9 bezeichnet.

Zusätzlich jedoch weist das System 8' aus Figur 3 eine Objektlageerkennungseinheit 12 mit drei mit sichtbarem Licht arbeitenden bildgebenden Kameras 13 auf. Die Objektlageerkennungseinheit dient dazu, die Lage und die Orientierung des Prüfobjekts (zusammen werden diese auch als Pose des Prüfobjekts bezeichnet) zu erfassen.

Die Varianten des Systems 8, 8` aus den Figuren 2 und 3 erfassen jeweils die Oberfläche 2 des Prüfobjekts 1 aus drei Raumrichtungen. Dadurch lassen sich Verunreinigungen auf der Oberfläche 2 des Prüfobjekts 1 mit Umformöl im Wesentlichen auf der Mantelfläche des Halbzeugs 1 erfassen. In Abhängigkeit von der geometrischen Ausgestaltung des Halbzeugs 1 werden ggf. die Deckelfläche und die Bodenfläche des Halbzeugs 1 bei der Prüfung nicht berücksichtig.

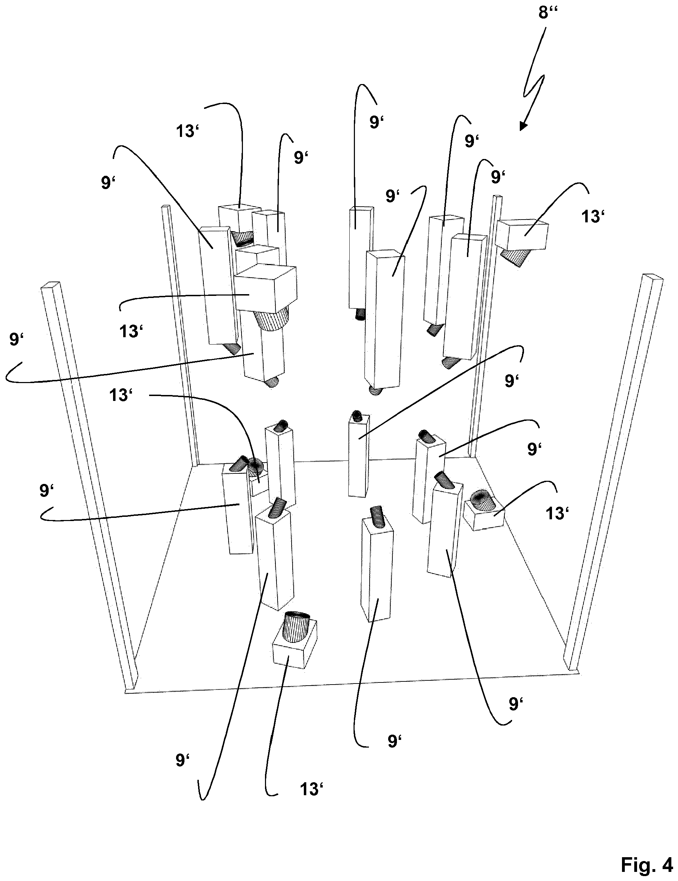

Demgegenüber ist die Variante des Systems 8" aus Figur 4 mit insgesamt vierzehn Kombinationen 9' aus jeweils einem Beleuchtungselement 3 und einer Kamera 4 ausgestattet. Zusätzlich weist das System 8" sechs spektral nicht gefiltert arbeitende Kameras 13' der Objektlageerfassungseinheit auf.

Während die Kameras 4 der Systeme 8, 8' aus den Figuren 2 und 3 im Wesentlichen in radialer Richtung, d. h. senkrecht zur Objektprüfstrecke, welche das Halbzeug 1 entlang fällt, blicken, sind die Raumrichtungen, in denen die Kameras der Kombinationen 9' des Systems 8" aus Figur 4 auf das Halbzeug 1 blicken unter einem Winkel zur Objektprüfstrecke angeordnet. Aufgrund der Anordnung der Kameras und der Beleuchtungselemente aber auch der Anzahl der Kameras und Beleuchtungselemente kann das System 8" alle Seiten, d. h. insbesondere die Mantelfläche, die Deckelfläche und die Bodenfläche Oberfläche 2, des Halbzeugs 1 im Wesentlichen gleichzeitig prüfen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammen-stellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Halbzeug als Prüfobjekt
- 2: Oberfläche des Halbzeugs
- 3: Beleuchtungselement
- 4: Kamera
- 5: Anregungsstrahlung
- 6: Laser
- 7: Strahlformer
- 8, 8', 8": System
- 9: Kombination aus Beleuchtungselement 3 und Kamera 4
- 10: Bodenplatte
- 11: Aussparung in der Bodenplatte 10
- 12: Objektlageerkennungseinheit
- 13, 13': Kamera der Objektlageerkennungseinheit 12
- 14: Objektprüfstrecke

## Patentansprüche

1. Verfahren zum Prüfen der räumlichen Verteilung einer Beschichtung oder einer Verunreinigung auf einer Oberfläche (2) eines Prüfobjekts (1) aufweisend folgende Schritte:
Beleuchten des Prüfobjekts (1) mit der Beschichtung oder der Verunreinigung mit elektromagnetischer Anregungsstrahlung (5) mit einer ersten Wellenlänge,
Erfassen einer elektromagnetischen Lumineszenzstrahlung die von der Beschichtung oder der Verunreinigung auf der Oberfläche (2) des Prüfobjekts (1) abgestrahlt wird, wobei die Lumineszenzstrahlung eine von der ersten Wellenlänge verschiedenen zweiten Wellenlänge aufweist,
Generieren von Objektdaten aus der erfassten Lumineszenzstrahlung und
Ausgeben der Objektdaten,
wobei das Beleuchten des Prüfobjekts (1) mit der Beschichtung oder der Verunreinigung aus einer Mehrzahl von Raumrichtungen erfolgt,
wobei das Erfassen der Lumineszenzstrahlung von der Beschichtung oder der Verunreinigung auf der Oberfläche (2) des Prüfobjekts (1) in einer Mehrzahl von Raumrichtungen erfolgt, und
wobei das Prüfobjekt (1) während des Beleuchtens des Prüfobjekts (1) und des Erfassens der Lumineszenzstrahlung entlang einer Objektprüfstrecke (14) fliegt,
wobei das Beleuchten des Prüfobjekts mit der Beschichtung oder der Verunreinigung mit einer Objektbeleuchtungseinheit mit einer Mehrzahl von Beleuchtungselementen in Form einer LED, eines LED-Flächenstrahlers, eines LED-Arrays oder eines Lasers erfolgt,
die Objektbeleuchtungseinheit derart ausgebildet und eingerichtet ist, dass sie das Prüfobjekt (1) mit einer Lichtleistung pro Flächeneinheit auf der Oberfläche des Prüfobjekts (1) von 0,01 W/cm² oder mehr beleuchtet,
wobei das Erfassen der Lumineszenzstrahlung mit einer Objekterfassungseinheit erfolgt,
die Objektbeleuchtungseinheit und die Objekterfassungseinheit derart zusammenwirken, dass eine Integrationszeit pro erfasstem Bildpunkt des Prüfobjekts (1) von weniger als 5 Zehntelsekunden resultiert,
wobei die Objekterfassungseinheit mindestens drei Detektoren (4) mit jeweils einem Beobachtungsfeld aufweist, wobei die Beobachtungsfelder der Detektoren (4) zusammen eine Kugel abdecken,
wobei die Objekterfassungseinheit derart eingerichtet und angeordnet ist, dass sie mit den mindestens drei Detektoren (4) das Prüfobjekt (1) aus der Mehrzahl von Raumrichtungen erfasst, wobei die Detektoren (4) als bildgebende Kameras ausgebildet sind,
und
wobei mit einer Objektlageerkennungseinheit (12) zumindest die räumliche Lage oder die Orientierung des Prüfobjekts (1) auf der Objektprüfstrecke (14) relativ zu der Objektlageerkennungseinheit (12) erfasst wird.

2. Verfahren nach dem vorhergehenden Anspruch , **dadurch gekennzeichnet, dass** die Beleuchtung des Prüfobjekts (1) entweder aus mindestens drei Raumrichtungen erfolgt, die eine Ebene aufspannen oder aus vier Raumrichtungen, die nicht alle in einer Ebene liegen.

3. Verfahren nach einem der vorhergehenden Ansprüche, **dadurch gekennzeichnet, dass** die Objektprüfstrecke (14) eine Fallstrecke ist, wobei das Prüfobjekt (1) während des Beleuchtens des Prüfobjekts (1) und des Erfassens der Lumineszenzstrahlung die Objektprüfstrecke (14) entlang fällt.

4. Verfahren nach einem der vorhergehenden Ansprüche, **dadurch gekennzeichnet, dass** die Objektbeleuchtungseinheit eine Mehrzahl von Beleuchtungselementen (3), aufweist, wobei die Beleuchtungselemente (3) derart eingerichtet und angeordnet sind, dass sie das Prüfobjekt (1) aus der Mehrzahl von Raumrichtungen beleuchten.

5. Verfahren nach einem der vorhergehenden Ansprüche, **dadurch gekennzeichnet, dass** die Objektbeleuchtungseinheit zumindest ein Beleuchtungselement (3) aufweist, wobei das Beleuchtungselement (3) derart eingerichtet und angeordnet ist, dass eine Oberfläche (2) des Prüfobjekts (1) zeilenweise mit der Anregungsstrahlung (5) abttastbar ist, wobei vorzugsweise zeitlich nacheinander eine Mehrzahl von Orten in der Zeile beleuchtbar ist.

6. Verfahren nach einem der vorhergehenden Ansprüche , **dadurch gekennzeichnet, dass** die Objekterfassungseinheit derart eingerichtet und angeordnet ist, dass sie mit der Mehrzahl von Detektoren (4) das Prüfobjekt (1) aus der Mehrzahl von Raumrichtungen gleichzeitig erfasst.

7. Verfahren nach einem der vorhergehenden Ansprüche, **dadurch gekennzeichnet, dass** ein Fördermittel vorgesehen ist, wobei das das Fördermittel das Prüfobjekt (1) zu einem Beginn der Objektprüfstrecke (14) fördert, und wobei das Fördermittel ein in einer vertikalen Richtung über der Objektprüfstrecke (14) angeordnetes Abwurfende aufweist, so dass das Prüfobjekt (1) entlang der Objektprüfstrecke (14) fällt.

## Claims

1. A method for testing the spatial distribution of a coating or an impurity on a surface (2) of a test object (1), the method comprising the following steps:
illuminating the test object (1) with the coating or the impurity with electromagnetic excitation radiation (5) having a first wavelength,
detecting electromagnetic luminescence radiation emitted by the coating or the impurity on the surface (2) of the test object (1), wherein the luminescence radiation comprises a second wavelength different from the first wavelength, generating object data from the detected luminescence radiation and outputting the object data,
wherein illuminating the test object (1) with the coating or the contamination is carried out from a plurality of spatial directions,
wherein detecting the luminescence radiation from the coating or the impurity on the surface (2) of the test object (1) is carried out in a plurality of spatial directions, and
wherein the test object (1) flies along an object test path (14) during illuminating the test object (1) and detecting the luminescence radiation,
wherein illuminating the test object with the coating or the contamination is carried out with an object illumination unit with a plurality of illumination elements in the form of an LED, an LED floodlight, an LED array or a laser,
wherein the object illumination unit is configured and arranged in such a way that it illuminates the test object (1) with a light output per unit area on the surface of the test object (1) of 0.01 W/cm² or more,
wherein detecting the luminescence radiation is carried out with an object detection unit,
wherein the object illumination unit and the object detection unit co-operate in such a way that an integration time per detected pixel of the test object (1) of less than 5 tenths of a second results,
wherein the object detection unit comprises at least three detectors (4), each of the at least three detectors (4) with an observation field, wherein the observation fields of the detectors (4) together cover a sphere,
wherein the object detection unit is arranged and located in such a way that it detects the test object (1) from the plurality of spatial directions with the at least three detectors (4), wherein the detectors (4) are configured as imaging cameras, and
wherein an object pose detection unit (12) detects at least the spatial position or the orientation of the test object (1) on the object test path (14) relative to the object pose detection unit (12).

2. The method according to the previous claim, **characterised in that** the test object (1) is illuminated either from at least three spatial directions which span a plane or from four spatial directions which do not all lie in a single plane.

3. The method according to any one of the previous claims, **characterised in that** the object test path (14) is a falling path, wherein the test object (1) falls along the object test path (14) during illuminating of the test object (1) and detecting of the luminescence radiation.

4. The method according to any one of the previous claims, **characterised in that** the object illumination unit comprises a plurality of illumination elements (3), wherein the illumination elements (3) are arranged and located such that they illuminate the test object (1) from the plurality of spatial directions.

5. The method according to any one of the previous claims, **characterised in that** the object illumination unit comprises at least one illumination element (3), wherein the illumination element (3) is arranged and located in such a way that a surface (2) of the test object (1) can be scanned line by line with the excitation radiation (5), wherein preferably a plurality of positions in the line can be illuminated in succession in time.

6. The method according to any one of the previous claims, **characterised in that** the object detection unit is arranged and located such that it simultaneously detects the test object (1) from the plurality of spatial directions with the plurality of detectors (4).

7. The method according to any one of the previous claims, **characterised in that** a conveyor means is provided, wherein the conveyor means conveys the test object (1) to a beginning of the object test path (14), and wherein the conveyor means comprises a drop end located in a vertical direction above the object test path (14), so that the test object (1) falls along the object test path (14).

## Revendications

1. Procédé de vérification de la répartition spatiale d'un dépôt ou d'une contamination sur une surface (2) d'un objet à vérifier (1), comprenant les étapes ci-dessous consistant à :
éclairer l'objet à vérifier (1) pourvu du dépôt ou de la contamination moyennant un rayonnement d'excitation électromagnétique (5) ayant une première longueur d'onde,
détecter un rayonnement luminescent électromagnétique émis par le dépôt ou la contamination sur la surface (2) de l'objet à vérifier (1), le rayonnement luminescent ayant une seconde longueur d'onde différente de la première longueur d'onde,
générer des données d'objet à partir du rayonnement luminescent détecté et
communiquer les données d'objet,
l'éclairage de l'objet à vérifier (1) pourvu du dépôt ou de la contamination étant mis en oeuvre à partir d'une pluralité de directions spatiales,
la détection du rayonnement luminescent du dépôt ou de la contamination sur la surface (2) de l'objet à vérifier (1) étant mis en oeuvre dans une pluralité de directions spatiales, et
l'objet à vérifier (1) parcourant une section de vérification d'objet (14) pendant l'éclairage de l'objet à vérifier (1) et la détection du rayonnement luminescent,
l'éclairage de l'objet à vérifier pourvu du dépôt ou de la contamination moyennant une unité d'éclairage d'objet étant mis en oeuvre avec une pluralité d'éléments d'éclairage sous la forme d'une LED, d'un panneau LED, d'une matrice LED ou d'un laser,
l'unité d'éclairage d'objet étant conçue et configurée de manière à éclairer l'objet à vérifier (1) avec une puissance lumineuse par unité de surface supérieure ou égale à 0,01 W/cm² sur la surface de l'objet à vérifier (1),
la détection du rayonnement luminescent étant mise en oeuvre moyennant une unité de détection d'objet,
l'unité d'éclairage d'objet et l'unité de détection d'objet coopérant de telle manière qu'un temps d'intégration inférieur à 5 dixièmes de seconde par point d'image détecté de l'objet à vérifier (1) est obtenu,
l'unité de détection d'objet ayant au moins trois détecteurs (4) avec respectivement un champ d'observation, les champs d'observation des détecteurs (4) réunis couvrant une sphère,
l'unité de détection d'objet étant configurée et agencée de telle manière qu'elle détecte l'objet à vérifier (1) à partir de la pluralité de directions spatiales moyennant lesdits au moins trois détecteurs (4), les détecteurs (4) étant conçus pour être des caméras d'imagerie, et
au moins la position spatiale ou l'orientation de l'objet à vérifier (1) sur la section de vérification d'objet (14) par rapport à l'unité de détection de position d'objet (12) étant détectée par une unité de détection de position d'objet (12).

2. Procédé selon la revendication précédente, **caractérisé en ce que** l'éclairage de l'objet à vérifier (1) est mis en oeuvre à partir d'au moins trois directions spatiales s'étendant dans un plan ou à partir de quatre directions spatiales ne se situant pas toutes dans un seul plan.

3. Procédé selon l'une quelconque des revendications précédentes, **caractérisé en ce que** la section de vérification d'objet (14) est une section de chute, l'objet à vérifier (1) tombant le long de la section de vérification d'objet (14) pendant l'éclairage de l'objet à vérifier (1) et la détection du rayonnement luminescent.

4. Procédé selon l'une quelconque des revendications précédentes, **caractérisé en ce que** l'unité d'éclairage d'objet comprend une pluralité d'éléments d'éclairage (3), les éléments d'éclairage (3) étant configurés et agencés de manière à éclairer l'objet à vérifier (1) à partir de la pluralité de directions spatiales.

5. Procédé selon l'une quelconque des revendications précédentes, **caractérisé en ce que** l'unité d'éclairage d'objet comprend au moins un élément d'éclairage (3), l'élément d'éclairage (3) étant configuré et agencé de telle manière qu'une surface (2) de l'objet à vérifier (1) puisse être balayée ligne par ligne avec le rayonnement d'excitation (5), une pluralité d'endroits au sein de la ligne pouvant être éclairés de préférence de manière chronologiquement successive.

6. Procédé selon l'une quelconque des revendications précédentes, **caractérisé en ce que** l'unité de détection d'objet est configurée et agencée de manière à détecter l'objet à vérifier (1) simultanément à partir de la pluralité de directions spatiales à l'aide de la pluralité de détecteurs (4).

7. Procédé selon l'une quelconque des revendications précédentes, **caractérisé en ce qu'**un moyen de transport est fourni, le moyen de transport transportant l'objet à vérifier (1) vers un début de la section de vérification d'objet (14), et le moyen de transport comprenant une extrémité d'éjection agencée dans une direction verticale au-dessus de la section de vérification d'objet (14), de sorte que l'objet à vérifier (1) tombe le long de la section de vérification d'objet (14).
